# EUROPÄISCHE PATENTSCHRIFT

(11) **EP 1 228 965 B1**
(45) Veröffentlichungstag und Bekanntmachung des Hinweises auf die Patenterteilung: **27.07.2005**
(21) Anmeldenummer: 02001552.5
(22) Anmeldetag: 23.01.2002
(51) Int. Cl.: B65B 55/10

(54) **Verfahren und Verpackungsmaschine zur Aufteilung einer breiten, mehrlagigen, in einer Verpackungsmaschine aseptisch zu verarbeitenden Packstoffbahn in mehrere gleichbreite Einzelbahnen**
Method and packaging machine for dividing in several strips of equal width, a multi-layered wide web to be treated aseptically in a packaging machine
Proçédé et machine d'emballage pour diviser en plusieurs bandes de largeur égale, une bande multicouche large à traiter aseptiquement dans une machine d'emballage

(30) Priorität: 03.02.2001 DE 10104858; 15.10.2001 DE 10150334
(43) Veröffentlichungstag der Anmeldung: 07.08.2002
(73) Patentinhaber: Hassia Verpackungsmaschinen GmbH, D-63691 Ranstadt (DE)
(72) Erfinder: Kurth, Gunter, 63691 Ranstadt (DE); Loth, Kay, Dipl.-Ing., 61209 Echzell (DE)
(74) Vertreter: Wolf, Günter, Dipl.-Ing.

(56) Entgegenhaltungen:
- EP-A- 0 816 233
- DE-A- 4 446 936

## Beschreibung

Die Erfindung betrifft ein Verfahren zur Aufteilung einer breiten, mehrlagigen, in einer Verpackungsmaschine aseptisch zu verarbeitenden Packstoffbahn in mehrere, gleichbreite Einzelbahnen gemäß Oberbegriff des unabhängigen Patentanspruches 1. Die Erfindung betrifft ferner eine Verpackungsmaschine zur Durchführung des Verfahrens.

Zur rationellen Herstellung von Schlauchbeuteln, egal ob Dreiseiten-Siegelrandbeutel(siehe hierzu DE-(A-P)2932236), sogenannte Stickpacks (siehe DE(-A-)9312664 Ul) oder dgl. ist es grundsätzlich bekannt, die dafür vorgesehene Packstoffbahn in mehrere gleichbreite Streifen zu schneiden und diese Streifen an mehrere, parallel nebeneinander angeordnete Form- und Füllrohre (bei Dreiseiten-Siegelrandbeutel Formrohrpaare) durch entsprechende Anformelemente heranzuführen. Die dafür erforderliche Mehrfachlängstrennung der Packstoffbahn erfolgt durch den Form- und Füllrohren vorgeschaltete Längsschneidmesser. Diese bekannte Methode, zu der bspw. auf die DE(-A-)446936 A1 zu verweisen ist, arbeitet absolut zufriedenstellend und bedarf keiner weiteren Erläuterung was im Einzelnen die Elemente zum Füllen, zum Siegeln und auch zum Abzug und Querabschneiden der gebildeten Einzelbeutel betrifft.

Sofern es sich bei der Packstoffbahn um einlagiges Folienmaterial handelt, kann diese Methode auch aseptisch bzw. mit einer für einen aseptischen Betrieb ausgebildeten Schlauchbeutelmaschine betrieben werden, bei der die Packstoffbahn erst einer Sterilistion unterzogen und unmittelbar anschließend in einen Sterilraum eingeführt wird, in dessen Endbereich sich auch die Längsschneideinrichtungen und die Form- bzw. Füllrohre mit ihren zugehörigen Elementen (Formschultern oder Folienstreifenanformelemente, Längssiegelwerkzeuge) unter Sterilbedingungen befinden (siehe die aber nur in etwa einschlägige EP(-A-)0 816 233 A1).

Nicht ohne weiteres anwendbar ist diese Methode, wenn extreme Anforderungen an die Sterilhaltung gestellt werden und mehrlagiger Packstoff, also Verbundfolie verarbeitet werden soll. Die Lagen solcher Verbundfolien werden nämlich bei ihrer Herstellung durch Kleber zusammengefügt. Da dies nicht unter aseptischen Bedingungen erfolgt, bleibt dabei der Einschluß von Mikroorganismen bzw. Keimen in solchen Verbundfolien nicht aus, die dann bei Zerschneiden der Packstoffbahn gegf. frei werden können. Dies stellt insoweit noch nicht das eigentliche Problem dar, da ohne weiteres in Betracht gezogen werden kann, das Zerschneiden der Packstoffbahn in Einzelbahnen vor der Sterilisation vorzunehmen und die Einzelbahnen durch die Sterlisationsstation zu führen, wobei auch die gegf. verkeimten Schnittränder der Einzelbahnen erfaßt würden und einer möglichen Rekontaminationsgefahr des Sterilraumes begegnet wäre. Damit ergibt sich aber das eigentliche Problem, denn es hat sich als außerordentlich schwierig und aufwendig, d.h., als nicht praktikabel erwiesen, die in der Regel relativ schmalen Einzelbahnen durch die ziemlich lange Strecke (Sterilisationsstation, Sterilraum mit bspw. Führungselementen, wie Vorschubwalzen, Schlaufenhebel, Bahnkantensteuerung, Form- und Siegelstation) zu führen, d.h., eine Einzelbahnführung ist für einen sicheren und störungsfreien Betrieb einer Schlauchbeutelverpackungsmaschine praktisch nicht realisierbar, zumal noch berücksichtigt werden muß, daß beim Trennschneiden Spannungen in der Packstoffbahn frei werden und zu unkontrollierbaren Seitenrandverläufen an den Einzelbahnen führen können, die in der Folgeförderstrecke praktisch nicht mehr bzw. nur mit beträchtlichem, von den Kosten her nicht mehr vertretbaren Aufwand zu korrigieren wären.

Der Erfindung liegt demgemäß die Aufgabe zugrunde, ein Verfahren und eine Verpackungsmaschine zu seiner Durchführung zu schaffen, die die Sterlilisation auch der freigelegten Längsschnittränder einer bereits mehrfach längsschnittbehandelten Packstoffbahn zulassen, dabei aber die Weiterführung der Einzelbahnen bis zur Form- und Füllstation komplikationslos und ohne Zusatzaufwand gewährleistet ist.

Diese Aufgabe ist hinsichtlich des Verfahrens nach der Erfindung durch die im Kennzeichen des unabhängigen Patentanspruches 1 angeführten Merkmale gelöst. Mit einer allerdings einen größeren Lasersteuerungsaufwand verlangenden Perforationsmethode kann das Verfahren nach Patentanspruch 1 auch gemäß Kennzeichen des abhängigen Patentanspruches 2 durchgeführt werden.

Das ganze Problem ist also auf gleichermaßen einfache und elegante Weise dadurch gelöst, daß man an der mehrlagigen Packstoffbahn ununterbrochene Längsschlitze anbringt, die aber an keiner Stelle die letzte, d.h., laserferne Lage der Packstoffbahn durchtrennen sondern nur anschneiden. Der bzw. die Laser müssen in diesem Falle bzgl. ihrer Eindringtiefe nicht wie bei der Perforationsmethode nach dem Abhängigen Patentanspruch 2 getaktet gesteuert werden, sondern werden mit einer einmal vorgegebenen derartigen Einschnittiefe betrieben, daß alle über der laserfernen Lage befindlichen Lagen durchtrennt und die laserferne Lage nur angeschnitten wird, dies aber unterbrechungslos. Die tatsächliche, d.h. vollständige Trennung der Packstoffbahn in separat verarbeitbare Einzelbahnen ergibt sich dann automatisch erst unmittelbar vor den Formrohren, da die Anformung der Einzelbahnen an die Rohrform mit einem Zerreißen der Restquerschnitte oder gemäß abhängigen Patentanspruch 2 der hier sogenannten Perforationsstege verbunden ist.

Mit der Maßgabe "in wählbaren Abständen die laserferne Lage der Packstoffbahn zur Ausbildung von Perforationsstegen nur anzuschneiden" gemäß abhängigen Patentanspruch 2 ist dafür gesorgt, daß auch in diesem Bereich alle Trennebenen in der Verbundfolie für die Sterilisation zugänglich angeschnitten sind, und außerdem, daß die Perforationsstege leicht durch seitliche Zugbelastung zerreißen können. Abgesehen davon, daß die Schlitzlängen einem Vielfachen der Stegbreiten entsprechen, können die Stegbreiten und Schlitzlängen durch entsprechende Lasersteuerung problemlos in Anpassung an das Lagenmaterial und auch die Lagenanzahl der jeweiligen Verbundfolie variert werden.

Steuerbare Laser, die derartige, spezielle Perforationslängsschnitte mit Perforationsstegen zulassen bzw. ermöglichen, sind bekannt und handelserhältlich, und es ist auch bekannt, Laser auf dem hier interessierenden unmittelbaren Sachgebiet zu verwenden, dies aber in einem anderen Zusammenhang, nämlich zur vorherigen Anbringung von Aufreißhilfen für die Verpackungen selbst. Verwiesen sei hierzu bspw. auf die DE(-A-)19636429 C1 und die EP(-A-)0473517 B1.

Aseptisch zu betreibende Schlauchbeutel-Verpackungsmaschinen bestehen im wesentlichen aus einer Sterilisationsstation mit sich daran anschließendem Sterilraum, in dessen Endbereich Formelemente, nämlich ein Formrohr mit Packstoffbahn-Anformelementen, angeordnet sind, was keiner besonderen Erläuterung bedarf, da hinlänglich bekannt. Solche Maschinen sind jedoch weder für eine mehrbahnige Packstoffbahnverarbeitung bestimmt, noch sind sie geeignet, den vorerläuterteten speziellen Aseptikansprüchen zu genügen, und zwar allein schon aus dem Grund nicht, weil an derartigen Maschinen die vorbeschriebene Problematik nicht ansteht.

Bezüglich der Verpackungsmaschine zur Durchführung der vorerläuterten Verfahren besteht also die erfindungsgemäße Lösung einfach darin, daß im Zuförderweg der Packstoffbahn vor der Sterilisationsstation der mit mehreren parallel nebeneinander angeordneten Formrohren bzw. Formrohrpaaren bestückten Verpackungsmaschine mehrere, der Anzahl der Formrohre minus eins entsprechende, bzgl. ihrer Schnittiefe und/oder Schnittlänge steuerbare Laser angeordnet sind, wobei eine Schnittlängensteuerung nur für das Verfahren nach dem abhängigen Patentanspruch 2 in Betracht zu ziehen ist.

Da durch die erfindungsgemäße Verfahren die Einzelbahnen nicht mehr bereits vereinzelt den Anformelementen zulaufen, sondern noch zusammenhängend, hat es sich als vorteilhaft erwiesen, dafür zu sorgen, daß die noch zusammenhängenden Einzelbahnen jeweils mittig auf ihre Anformelemente, d.h., die sogennannten Formschultern der Formrohre zulaufen.

In vorteilhafter Weiterbildung wird deshalb das erfindungsgemäße Verfahren so geführt, daß die an den Restquerschnitten oder nur an den Perforationsstegen noch zusammenhängenden Einzelbahnen in steriler Atmosphäre vor ihrem Zulauf auf die Schlauchformelemente im Ganzen einer Bahnkantensteuerung zur zentrischen Ausrichtung der Einzelbahnen auf ihr jeweiliges Schlauchformelement unterworfen wird. Apparativ findet dies seinen Niederschlag einfach darin, daß vor den Formrohren Bahnkantensteuerungselemente angeordnet sind.

Gleichermaßen hat sich als vorteilhaft erwiesen, eine solche, an sich im Verpackungsmaschinenbau grundsätzlich bekannte Bahnkantensteuerung auch bereits vor der Laserschneidstation anzuordnen, d.h., zwischen dieser und der Vorratsrolle, von der die noch laserunbehandelte Packstoffbahn abgezogen wird. Diese nicht im Sterilraum befindliche Bahnkantensteuerung sorgt vorteilhaft dafür, daß die von der Rolle kommende Packstoffbahn auch schon korrekt bereits mittig geführt auf die Laser zuläuft, womit gewährleistet ist, daß die Laserlängsschnitte zu weitestgehend gleichen Breiten der Einzelbahnen führen.

Bezgl. der Bahnkantensteuerung, die vor den Formrohren, also innerhalb des Sterilraumes vorzunehmen bzw. angeordnet ist besteht ferner eine vorteilhafte Weiterbildung darin, daß von den Bahnkantensteuerungselementen die Stellelemente für die im Sterilraum befindlichen Bahnführungselemente außerhalb des Sterilraumes und vorzugsweise optoelektronischen Kantensensoren außerhalb des Sterilraumes an Durchsichtsfenstern des Sterilraumes angeordnet sind. Dies geschieht mit Rücksicht auf die notwendige Vorsterilisation des Sterilraumes bei Inbetriebsetzung einer solchen Verpackungsmaschine, um darin so wenig wie möglich versteckte, d.h., für das dafür eingeleitete Sterilisationsmedium schwer zugängliche Keimansatzmöglichkeiten zu bieten. Da die Einzelbahnen noch zusammenhängen, sind also nur zwei Randkantensensoren erforderlich und nur ein alle Einzelbahnen erfassendes Bahnführungselement, was wesentlich weniger aufwendig ist, als wenn man, wie vorerwähnt, von vornherein die Packstoffbahn total in Einzelbahnen auftrennen würde.

Das erfindungsgemäße Verfahren und die zugehörige Verpackungsmaschine zu dessen Durchführung werden nachfolgend anhand der zeichnerischen Darstellung von Ausführungsbeispielen näher erläutert.

Es zeigt schematisch
- Fig. 1: in Seitenansicht die aseptisch arbeitende Schlauchbeutel-Verpackungsmaschine;
- Fig. 2: in Draufsicht die in vier Einzelbahnen geteilte Packstoffbahn mit Zuordnung der Laser und der Formstationen;
- Fig. 3: in extremer Vergrößerung einen Schnitt längs Linie I-I in Fig.2;
- Fig. 4: in Seitenansicht eine im wesentlichen der Fig.1 entsprechende Darstellung mit weiteren Details;
- Fig. 5: schematisch die Elemente zur Vorsterilisation und Sterilhaltung des Sterilraumes;
- Fig. 6: eine besondere Ausführungsform der Maschine zur Schnitttiefenkontrolle und
- Fig. 7: eine Draufsicht auf einen Teil der Packstoffbahn mit Elementen zur Kontrolle der Schnittiefe.

Ausgegangen ist beim Ganzen von einer Schlauchbeutel-Verpackungsmaschine, die eine Sterilisationsstation 6 mit sich daran anschließendem Sterilraum 7 umfaßt, in dessen Endbereich 8 Formelemente, nämlich Formrohr 9 mit Einzelbahn-Anformelementen 10 angeordnet sind, für die bevorzugt sogenannte Formschultern in Frage kommen.

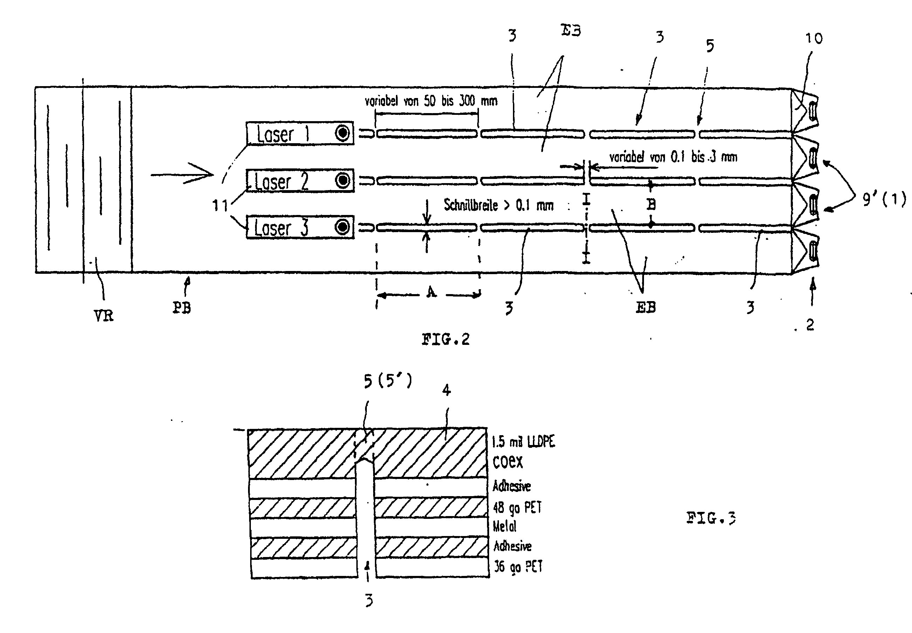

Bei der Herstellung von Dreiseiten-Siegelrandbeuteln ist an Stelle eines Formrohres, wie einleitend vorerwähnt, jeweils ein Formrohrpaar 9' zu verstehen, wie sie auch gemäß Ausführungsbeispiel in Fig. 2 ganz rechts, die Form- und Füllstation 2 bildend, dargestellt sind.

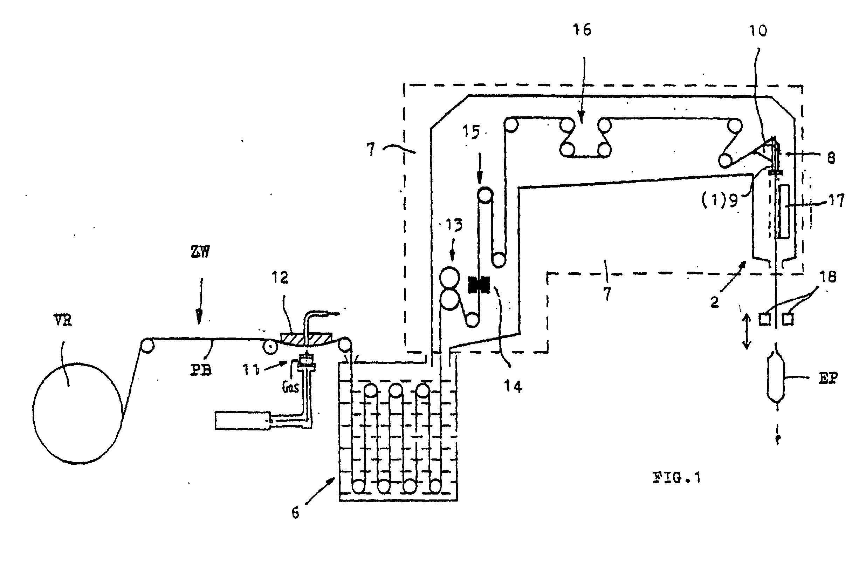

Für eine solche Schlauchbeutel-Verpackungsmaschine ist nun zur Durchführung des schon weitestgehend vorerläuterten Verfahrens unter Verweis auf Fig. 1 wesentlich, daß im Zuförderweg ZW der Packstoffbahn PB vor der Sterilisationsstation 6 der mit mehreren parallel nebeneinander angeordneten Formrohren 9 bzw. Formrohrpaaren 9' bestückten Verpackungsmaschine mehrere, der Anzahl der Formrohre 9 minus eins entsprechende, bzgl. ihrer Einschnittiefe steuerbare Laser 11 angeordnet sind.

Beim Ausführungsbeispiel gemäß Fig. 2 wird die von der Vorratsrolle VR abgezogene, mehrlagige Packstoffbahn PB in vier Einzelbahnen EB gegliedert bzw. geteilt, d.h., es sind in diesem Falle drei Laser 11 mit der Einzelbahnbreite B entsprechendem Abstand nebeneinander unter der Packstoffbahnförderstrecke angeordnet.

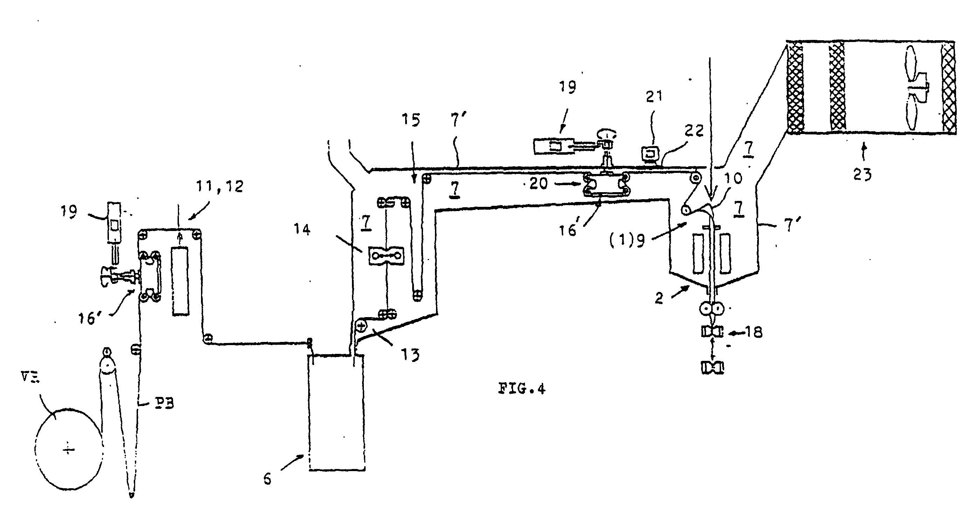

Die Länge der Perforationsschlitze 3 kann dabei bspw. 50 mm bis 300 mm betragen bei einer Schnittbreite von bspw. 0,1 mm und die in der laserfernen Lage 4 stehenbleibenden Perforationsstege 5 können bzgl. ihrer Länge bspw. ebenfalls variabel mit 0,1 bis 1 mm bemessen werden. Diese Perforationsstege 5 sind gestrichelt im extrem vergrößert in Fig.3 dargestellten Schnitt I-I der Fig.1 verdeutlicht, und zwar einer bspw. aus einschließlich der Adhesive insgesamt sechs Lagen gebildeten Verbundfolie, wobei neben der Schnittdarstellung auch die üblichen Lagenbezeichnungen nur der Vollständigkeit halber mit angegeben sind. Die Gesamtstärke einer solchen Verbundfolie beträgt dabei nur 0,1 mm oder wenig mehr, was deutlicht macht, daß es sich bei den hier sogenannten Perforationsstegen 5 um denkbar leicht zerreißbare Materialstege handelt, die, wie sich gezeigt hat, allein durch das Auflaufen der Einzelbahnen EB auf benachbarte Formschultern 10 geteilt bzw. durchgetrennt werden.

Da beim Laserschneiden unvermeidbar Gase entstehen, ist auf der anderen Seite der Packstoffbahn PB eine Gasabsaugung 12 angeordnet. Bei den im Sterilraum 7 befindlichen und der Vollständigkeit halber in Fig. 1 mit angedeuteten Bahnführungselementen handelt es sich um ein Vorschubwalzenpaar 13, einen Sterilisationsmittelrakel 14, einen sogenannten Bahnschlaufenhebel 15 und eine Bahnkantensteuerung 16. Die Darstellung der Sterilisationsstation 6 in Form eines Sterilisationsmittelbades, das von der bereits geschnittenen Packstoffbahn PB, wie bspw. dargestellt, durchlaufen wird, ist nicht, zwingend, d.h., es kann sich auch bspw. um eine Bedampfungs- oder auch Bestrahlungskammer handeln.

Was nun das Verfahren zur Umwandlung der entsprechend breit bemessenen, mehrlagigen, in einer Verpackungsmaschine aseptisch zu verarbeitenden Packstoffbahn PB in mehrere, gleichbreite Einzelbahnen EB betrifft, so werden diese wie bisher über eine entsprechende Anzahl von Formschultern 10 der Form- und Füllstation 2 der Verpackungsmaschine zugeführt und in dieser gleichzeitig in mehreren Strängen zu Einzelpackungen EP ausgeformt, gefüllt, geschlossen und vereinzelt.

Entscheidend ist nun aber, daß an der breiten, mehrlagigen Packstoffbahn PB vor ihrem Einlauf in die Sterilisationsstation 6 im Abstand der Breite B der Einzelbahnen EB die Längsschlitze 3 mit den entsprechend gesteuerten Lasern 11 eingeschnitten werden, und zwar durch alle Lagen hindurchgehend, wobei allerdings bei der Ausbildung von Perforationsstegen 5 in wählbaren Abständen A die laserferne Lage 4 der Packstoffbahn PB, die an den hergestellten Einzelpackungen EP die Innenseite bildet zur Ausbildung der Perforationsstege 5 nur angeschnitten wird, wie dies aus Fig.3 ersichtlich ist. Danach werden die durch die Stege 5 noch zusammenhängenden Einzelbahnen EB nach ihrer Sterilisation unter Weiterförderung in steriler Atmosphäre einer entsprechenden Anzahl von Schlauchformelementen 1 und Formrohren zugefördert, was beim Übergang der noch bandartigen Einzelbahnen EB in Schlauchform automatisch mit einer Trennung der dünnen Perforationsstege 5 verbunden ist. Die Längsversiegelung der zu Schläuchen umgeformten Einzelbahnen EB am Formrohr erfolgt dann in herkömmlicher Weise mit Längssiegelbacken 17 beim taktweisen Abzug der Schläuche durch Quersiegelbacken 18.

Zur Fig.4 ist eine wiederholende Erläuterung des Verfahrens und der Verpackungsmaschine entbehrlich, zumal in dieser die gleichen Bezugszeichen für entsprechende Elemente benutzt sind. Bezgl. der Weiterbildung ist hinsichtlich des Verfahrens, orientiert an Fig.4, wesentlich, daß die an den Perforationsstegen 5 noch zusammenhängenden Einzelbahnen EB enthaltende Packstoffbahn PB in steriler Atmosphäre vor ihrem Zulauf auf die Schlauchformelemente 1 im Ganzen einer Bahnkantensteuerung zur zentrischen Ausrichtung der Einzelbahnen EB auf ihr Schlauchformelement 1 unterworfen wird, und in Weiterbildung dazu, daß die Packstoffbahn PB vor dem Laserschneiden einer Bahnkantensteuerung unterworfen wird.

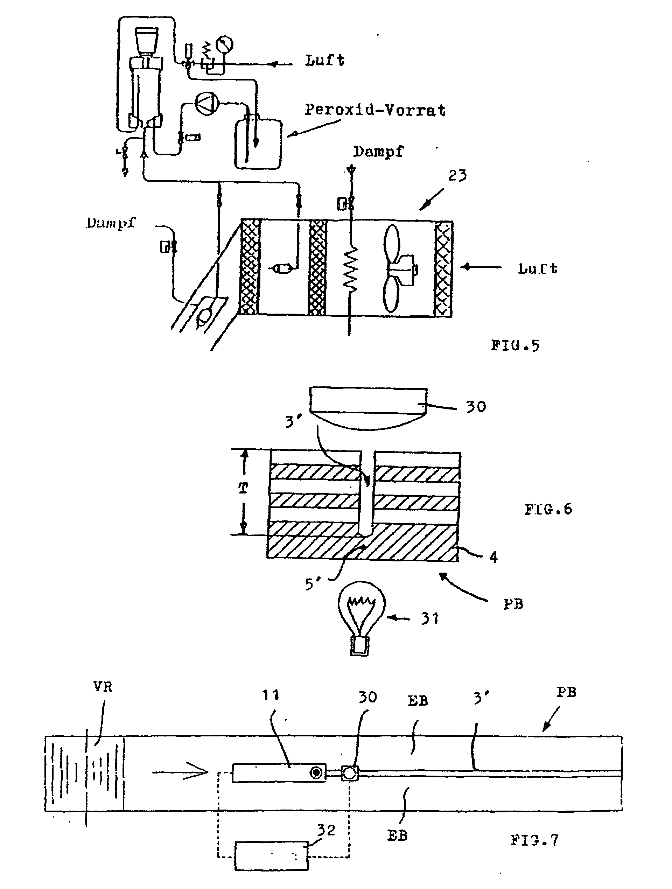

Die dafür vor den Formrohren bzw. Schlauchformelementen 1 angeordneten Bahnkantensteuerungselemente sind mit 16 bezeichnet. Aus den einleitend genannten Gründen sind von den Bahnkantensteuerungselementen 16 die Stellelemente 19 für die im Sterilraum 7 befindlichen eigentlichen Bahnführungselemente 20 außerhalb des Sterilraumes 7 und die optoelektronischen Krantensensoren 21 außerhalb des Sterilraumes 7 an einem oder zwei Durchsichtsfenstern 22 des von einem sogenannten Steriltunnel 7' definierten Sterilraumes 7 angeordnet. Außerhalb des Sterilraumes 7, d.h., in Durchlaufrichtung vor den Lasern 11 befinden sich, wie in Fig.1 bspw. dargestellt, die Bahnkantensteuerungselemente 16', die im Einzelnen und bezgl. ihrer Funktion keiner näheren Erläuterung bedürfen, da hinlänglich bekannt. Mit 23 ist, wie ergänzend dargestellt, ein Sterillufterzeuger bezeichnet, mit dem während des Betriebes der Maschine der Sterilraum 7 unter leichtem Überdruck gehalten wird. Nur der Vollständigkeit halber sind in Fig.5 und in Ergänzung zu Fig.1 die Elemente zur Vorsterilisierung des Sterilraumes 7 vor Inbetriebnahme der Maschine dargestellt, die keiner besonderen Erläuterung bedürfen, da hier nur von sekundärem Interesse.

Was die vorerwähnte und bevorzugte zweite Methode betrifft, nämlich unter vorteilhafter Reduzierung des Steuerungsaufwandes für die Laser 11 die Packstoffbahn PB bei unveränderter Einschnittiefe T der Laser 11 so anzuschneiden, daß der bzw. die Längsschnitte sämtliche Lagen der Packstoffbahn, wie gehabt durchtrennen, die laserferne Lage 4 aber nur angeschnitten wird Leerstelle, so wird diesbezüglich auf die Fig. 6,7 verwiesen. Hierbei bleiben die Einzelbahnen EB nicht durch beabstandete Perforationsstege 5 verbunden, sondern durchgehend durch den im Schnittlinienbereich stehengebliebenen Restquerschnitt 5' der laserfernen Lage 4. Mit Rücksicht auf die dann im Formrohrbereich notwendige Trennung der Packstoffbahn PB in Einzelbahnen EB hat es sich als vorteilhaft erwiesen, dafür zu sorgen, daß eine einwandfreie Aufteilung erfolgt, d.h., durch eine Permanentkontrolle der Tiefe T des oder der Längsschnitte 3'. Dafür ist unter Verweis auf Fig.7 hinter dem bei diesem Ausführungsbeispiel nur einem Laser 11 ein mit der Lasersteuerung 32 verschalteter Sensor 30 auf der einen Seite über dem Längsschnitt 3' angeordnet und darunter eine Lichtquelle 31. Falls sich aus welchen Gründen auch immer die Stärke des Restquerschnittes 5' ändern sollte, gelangt mehr oder weniger Licht zum Sensor 30, und via Lasersteuerung 32 wird der Laser 11 wieder auf die richtige Einschnittiefe T einreguliert.

## Patentansprüche

1. Verfahren zur Aufteilung einer breiten, mehrlagigen, in einer Verpackungsmaschine aseptisch zu verarbeitenden Packstoffbahn (PB) in mehrere, gleichbreite Einzelbahnen (EB), die über eine entsprechende Anzahl von Schlauchformelementen (1) der Form- und Füllstation (2) der Verpackungsmaschine zugeführt und in dieser am Strang zu Einzelpackungen ausgeformt, gefüllt, geschlossen und vereinzelt werden,
**dadurch gekennzeichnet,**
**daß** an der breiten, mehrlagigen Packstoffbahn (PB) vor ihrer Sterilisation im Abstand der Breite (B) der Einzelbahnen (EB) Längsschlitze (3') per Laser eingeschnitten werden, wobei die laserferne Lage (4) der Packstoffbahn (PB) nur angeschnitten wird, wonach die in der laserfernen Lage noch zusammenhängenden Einzelbahnen (EB) nach ihrer Sterilisation unter Weiterförderung in steriler Atmosphäre einer entsprechenden Anzahl von Schlauchformelementen (1) zugefördert und dabei die die Einzelbahnen (EB) zusammenhaltende Restverbindung bzw. der Restquerschnitt (5') in der laserfernen Lage (4) aufgerissen und damit die Einzelbahnen voneinander getrennt werden.

2. Verfahren nach Anspruch 1,
**dadurch gekennzeichnet,**
**daß** die laserferne Lage (4) im Zuge der Längsschlitze (3) in wählbaren Abständen (A) zur Ausbildung von Perforationsstegen (5) in deren Bereich nur angeschnitten, ansonsten aber voll durchschnitten wird.

3. Verfahren nach Anspruch 1,
**dadurch gekennzeichnet,**
**daß** zur Permanentkontrolle der Schnittiefe (T) der Längsschlitze (3') die Packstoffbahn (PB) in deren Bereich durchleuchtet und das durch die laserferne, angeschnittene Lage (4) im Bereich der Längsschlitze (3') noch hindurchgehende Licht mittels Sensoren (30) aufgenommen und von den Sensoren (30) aus die Laser (11) bzgl. ihrer Schnittiefe geregelt werden.

4. Verfahren nach einem der Ansprüche 1 bis 3,
**dadurch gekennzeichnet,**
**daß** die an den Perforationsstegen (5) oder an der an den Längsschlitzen (3) verbliebenen Restverbindung bzw. dem Restquerschnitt (5') noch zusammenhängende Einzelbahnen (EB) enthaltende Packstoffbahn (PB) in steriler Atmosphäre vor ihrem Zulauf auf die Schlauchformelemente (1) im Ganzen einer Bahnkantensteuerung zur zentrischen Ausrichtung der Einzelbahnen (EB) auf ihr Schlauchformelement (1) unterworfen wird.

5. Verfahren nach Anspruch 4,
**dadurch gekennzeichnet,**
**daß** die Packstoffbahn (PB) vor dem Laserschneiden einer Bahnkantensteuerung unterworfen wird.

6. Verpackungsmaschine zur Durchführung der Verfahrens nach Anspruch 1, bestehend aus einer Sterilisationsstation (6) mit sich daran anschließenden Sterilraum (7), in dessen Endbereich (8) Formelemente, nämlich Formrohr (9) mit Einzelbahn-Anformelementen (10) angeordnet sind,
**dadurch gekennzeichnet,**
**daß** im Zuförderweg der Packstoffbahn (PB) vor der Sterilisationsstation (6) der mit mehreren parallel nebeneinander angeordneten Formrohren (9) bestückten Verpackungsmaschine mehrere, der Anzahl der Formrohre (9) minus eins entsprechende, bzgl. Einschnittiefe (T) steuerbare Laser (11) angeordnet sind.

7. Verpackungsmaschine 6 und zur Durchführung des Verfahrens nach Anspruch 2,
**dadurch gekennzeichnet,**
**daß** die Laser (11) auch hinsichtlich ihrer Einschnittlänge steuerbar ausgebildet sind.

8. Verpackungsmaschine nach Anspruch 6,
**dadurch gekennzeichnet,**
**daß** zwischen den Lasern (11) und der Sterilisationsstation (6) auf der einen Seite der Packstoffbahn (PB) Lichtquellen (31) und diesen gegenüber auf der anderen Seite Sensoren (30) angeordnet sind, die mit der Lasersteuerung (32) verschaltet sind.

9. Verpackungsmaschine nach einem der Ansprüche 6 bis 8,
**dadurch gekennzeichnet,**
**daß** vor den Formrohren (9) Bahnkantensteuerungselemente (16) angeordnet sind.

10. Verpackungsmaschine nach Anspruch 9,
**dadurch gekennzeichnet,**
**daß** von den Bahnkantensteuerungselementen (16) die Stellelemente (19) für die im Sterilraum (7) befindlichen Bahnführungselemente (20) außerhalb des Sterilraumes und die optoelektronischen Kantensensoren (21) außerhalb des Sterilraumes (7) an Durchsichtsfenstern (22) des Sterilraumes angeordnet sind.

11. Verpackungsmaschine nach einem der Ansprüche 6 bis 10,
**dadurch gekennzeichnet,**
**daß** in Durchlaufrichtung vor den Lasern (11) Bahnkantensteuerungselemente (16') angeordnet sind.

## Claims

1. A method for dividing a wide, multi-layer packaging material web (PB) to be processed aseptically in a packaging machine into a plurality of equal-width individual webs (EB) which are supplied to the forming and filling station (2) of the packaging machine via a corresponding number of tube forming elements (1) and are formed, filled, closed and separated therein on the strand to form individual packages,
**characterised in**
**that** longitudinal slits (3') are cut by laser in the wide, multi-layer packaging material web (PB) before its sterilisation at a distance of the width (B) of the individual webs (EB), wherein the layer (4) of the packaging material web (PB) distant from the laser is only partly cut, whereafter after being sterilised and conveyed further in a sterile atmosphere, the individual webs (EB) which are still cohesive in the layer distant from the laser are supplied to a corresponding number of tube forming elements (1) and the residual connection or the residual cross-section (5') in the layer (4) distant from the laser, which holds the individual webs together, is torn and the individual webs are thus separated from one another.

2. The method according to claim 1,
**characterised in**
**that** the layer (4) distant from the laser is only partly cut in the course of the longitudinal slits (3) at selectable distances (A) to form perforation ties (5) in the area thereof, but otherwise is completely cut through.

3. The method according to claim 1,
**characterised in**
**that** to permanently monitor the cutting depth (T) of the longitudinal slits (3') the packaging material web (PB) is transilluminated in the area thereof and that light still passing through the partly cut layer (4) distant from the laser in the area of the longitudinal slit (3') is received by means of sensors (30) and the cutting depth of the lasers (11) is controlled by the sensors (30).

4. The method according to any one of claims 1 to 3,
**characterised in**
**that** the packaging material web (PB) containing still-cohesive individual webs (EB) at the perforation ties (5) or at the residual connection or the residual cross-section (5') remaining at the longitudinal slits (3) is subjected as a whole to a web edge control to centrally align the individual webs (EB) to their tube forming element (1) in a sterile atmosphere before they approach the tube forming elements (1).

5. The method according to claim 4, **characterised in**
**that** the packaging material web (PB) undergoes web edge control before the laser cutting.

6. A packaging machine for implementing the method according to claim 1, comprising a sterilising station (6) followed by a sterile area (7) having forming elements, namely a forming tube (9) with individual web forming elements (10) arranged in its end area (8),
**characterised in**
**that** a plurality of lasers (11) corresponding to the number of forming tubes (9) minus one and having a controllable cutting depth are arranged in the feed path of the packaging material web (PB) before the sterilising station of the packaging machine equipped with a plurality of forming tubes (9) arranged parallel to one another.

7. The packaging machine [according to claim] 6 and for implementing the method according to claim 2,
**characterised in**
**that** the lasers (11) are also constructed as controllable with regard to their cutting length.

8. The packaging machine according to claim 6,
**characterised in**
**that** between the lasers (11) and the sterilising station (6) light sources (31) are arranged on one side of the packaging material web (PB) and sensors (30) are arranged opposite thereto on the other side, said sensors being wired with the laser control system (32).

9. The packaging machine according to any one of claims 6 to 8,
**characterised in**
**that** web edge control elements (16) are arranged before the forming tubes (9).

10. The packaging machine according to claim 9,
**characterised in**
**that** pf the web edge control elements (16) adjusting elements (19) for the web guiding elements (20) located in the sterile area (7) are arranged outside the sterile area and the opto-electronic edge sensors (21) are arranged outside the sterile area (7) on the viewing windows (22) of the sterile area.

11. The packaging machine according to any one of claims 6 to 10,
**characterised in**
**that** web edge control elements (16') are arranged in the running direction before the lasers (11).

## Revendications

1. Procédé pour la division d'un train de matériau d'emballage (PB) large, en plusieurs couches, à traiter aseptiquement dans une machine de conditionnement, en plusieurs trains de matériau individuels (EB) de largeur égale, qui sont introduits par une pluralité correspondante d'éléments de formage tubulaires (1) dans le poste de formage et de remplissage (2) de la machine de conditionnement et sont dans celui-ci formés, remplis, fermés et individualisés en emballages individuels en file,
**caractérisé en ce que**
sur le train de matériau d'emballage (PB) large, en plusieurs couches avant sa stérilisation , des fentes longitudinales (3') sont découpées au laser dans l'espace, correspondant à la largeur (B) des trains de matériau individuels (EB), moyennant quoi la couche (4) éloignée du laser du train de matériau d'emballage (PB) est seulement légèrement découpée, après quoi les trains de matériau individuels (EB) encore agglomérés dans la couche éloignée du laser après leur stérilisation sont introduits par un transport en continu dans une atmosphère stérile dans une pluralité correspondante d'éléments de formage tubulaires (1) et la liaison restante qui agglomère les trains de matériau individuels (EB), respectivement la section transversale restante (5') est ensuite déchirée dans la couche (4) éloignée du laser et les trains de matériau individuels sont ainsi séparés les uns des autres.

2. Procédé selon la revendication 1,
**caractérisé en ce que**,
la couche (4) éloignée du laser sur le cours des fentes longitudinales (3) à des espaces (A) sélectionnables formant des traverses à perforer est seulement légèrement découpée au niveau de ceux-ci ou sinon totalement découpée.

3. Procédé selon la revendication 1,
**caractérisé en ce que**,
afin de contrôler en permanence la profondeur de découpe (T) des fentes longitudinales (3'), le train de matériau d'emballage (PB) est éclairé au niveau de celles-ci et la lumière traversant encore la couche éloignée du laser, légèrement découpée (4) au niveau des fentes longitudinales (3') est détectée au moyen de capteurs et le laser (11), respectivement sa profondeur de découpe sont réglés par les capteurs.

4. Procédé selon une des revendications 1 à 3,
**caractérisé en ce que**,
le train de matériau d'emballage (PB) contenant des trains de matériau individuels (EB) encore agglomérés au niveau des traverses à perforer (5) ou au niveau de la liaison restante, respectivement la section transversale restante (5') sur les fentes longitudinales (3) est subordonné en entier dans une atmosphère stérile avant son acheminement vers les éléments de formage tubulaires (1) à une unité de commande des arêtes du train de matériau afin d'aligner centralement les trains de matériau individuels (EB) sur leur élément de formage tubulaire (1).

5. Procédé selon la revendication 4,
**caractérisé en ce que**,
le train de matériau d'emballage (PB) est subordonné avant la découpe au laser à une unité de commande des arêtes du train de matériau.

6. Machine de conditionnement pour mettre en oeuvre le procédé selon la revendication 1, constituée d'un poste de stérilisation (6) comportant une chambre stérile (7) contiguë, à l'extrémité (8) de laquelle des éléments de formage, notamment des tuyaux de formage (9) comportant des éléments de façonnage du train de matériau individuel (10) sont disposés,
**caractérisée en ce que**,
sur le chemin de transport du train de matériau d'emballage (PB) avant le poste de stérilisation (6) de la machine de conditionnement équipée de plusieurs tuyaux de formage (9) disposés parallèlement les uns à côté des autres, plusieurs lasers (11) réglables relativement à la profondeur de coupe (T), correspondant au nombre de tuyaux de formage (9) moins un sont disposés.

7. Machine de conditionnement 6 et pour mettre en oeuvre le procédé selon la revendication 2,
**caractérisée en ce que**, les lasers (11) sont également configurés de manière à pouvoir être réglés en ce qui concerne leur longueur de découpe.

8. Machine de conditionnement selon la revendication 6,
**caractérisée en ce que**,
entre les lasers (11) et le poste de stérilisation (6) sur un des côtés du train de matériau d'emballage (PB), des sources de lumière (31) et des capteurs (30) reposant en vis-à-vis de ces dernières sur l'autre côté sont disposés, lesquels sont branchés avec l'unité de commande des lasers (32).

9. Machine de conditionnement selon une des revendications 6 à 8,
**caractérisée en ce que**,
des éléments de commande des arêtes du train de matériau (16) sont disposés avant les tuyaux de formage (9).

10. Machine de conditionnement selon la revendication 9,
**caractérisée en ce que**,
à partir des éléments de commande des arêtes du train de matériau (16), les éléments de réglage (19) pour les éléments de guidage du train de matériau (20) se trouvant dans la chambre stérile (7) sont disposés à l'extérieur de la chambre stérile et les capteurs d'arêtes opto-électroniques (21) sont disposés à l'extérieur de la chambre stérile (7) sur des fenêtres d'observation (22) de la chambre stérile.

11. Machine de conditionnement selon une des revendications 6 à 10,
**caractérisée en ce que**,
dans la direction d'acheminement à l'avant des lasers (11), des éléments de commande des arêtes du train de matériau (16') sont disposés.
